# EUROPÄISCHE PATENTANMELDUNG

(11) **EP 3 095 531 A1**
(43) Veröffentlichungstag der Anmeldung: **23.11.2016**
(21) Anmeldenummer: 16170343.4
(22) Anmeldetag: 19.05.2016
(51) Int. Cl.: B07C 5/342

(54) **VERFAHREN UND VORRICHTUNG ZUR EINSTELLUNG DER IN EINEN OPTISCHEN DETEKTOR GELANGENDEN STRAHLUNGSLEISTUNG**

(30) Priorität: 19.05.2015 AT 5008915 U
(71) Anmelder: Binder + Co AG, 8200 Gleisdorf (AT)
(72) Erfinder: Kreimer, Daniel, 8160 Weiz (AT); Neuhold, Robert, 8200 Gleisdorf (AT)
(74) Vertreter: KLIMENT & HENHAPEL

(57) **Zusammenfassung**

Die Erfindung betrifft ein Verfahren zur Einstellung der Strahlungsleistung des Lichts, das in einen optischen Detektor (3a,3b) gelangt, durch welche Objekte in einem einschichtigen Materialstrom von Objekten identifiziert werden, wobei
- die Objekte mit zumindest einer Lichtquelle (2a,2b) bestrahlt werden,
- zumindest ein Teil des emittierten Lichtes mit den Objekten in Wechselwirkung tritt,
- das Licht der Wechselwirkung von zumindest einem Detektor (3a,3b) erfasst wird,
- aufgrund des Vergleiches des detektierten Lichts mit bekannten Daten betreffend den Zusammenhang zwischen unterschiedlichen Objekten und deren Licht der Wechselwirkung, verschiedene Objekte identifiziert werden.

Um die Lebensdauer der zumindest einen Lichtquelle (2a,2b) zu erhöhen, wird die in den zumindest einen Detektor (3a,3b) eintretende Strahlungsleistung über eine verstellbare Blende (4) in Abhängigkeit von der Strahlungsleistung des von der Lichtquelle (2a,2b) emittierten Lichts eingestellt.

## Beschreibung

### GEBIET DER ERFINDUNG

Die Erfindung betrifft ein Verfahren zur Einstellung der Strahlungsleistung des Lichts, das in einen optischen Detektor gelangt, durch welche Objekte in einem einschichtigen Materialstrom von Objekten identifiziert werden, wobei
- die Objekte mit zumindest einer Lichtquelle bestrahlt werden,
- zumindest ein Teil des emittierten Lichtes mit den Objekten in Wechselwirkung tritt,
- das Licht der Wechselwirkung von zumindest einem Detektor erfasst wird,
- aufgrund des Vergleiches des detektierten Lichts mit bekannten Daten betreffend den Zusammenhang zwischen unterschiedlichen Objekten und deren Licht der Wechselwirkung, verschiedene Objekte identifiziert werden,
sowie eine Detektionsvorrichtung zur Durchführung eines solchen Verfahrens.

### STAND DER TECHNIK

Verfahren zur sensorgestützten Sortierung von Schüttgütern, wie beispielsweise Altglas, Kunstoffen oder Mineralien, sind beispielsweise aus der EP 1 752 228 B1 oder der AT 11 769 U1 bekannt. Dabei wird ein einschichtiger Materialstrom aus Objekten mittels optoelektronisch gesteuerter Sortiervorrichtungen in verschiedene Klassen aufgeteilt, wobei sich die einzelnen Klassen durch die Eigenschaften der ihr zugeordneten Objekte unterscheiden. Beispielsweise können die Klassen durch verschiedene Farben oder Inhaltsstoffe definiert sein.

Der Sortiervorgang basiert darauf, dass der Materialstrom, etwa auf einem Sortierband oder während einer Freifallstrecke, beispielsweise auf einer Rutsche, mit Licht aus einer Lichtquelle bestrahlt wird und das emittierte Licht in Wechselwirkung mit den Objekten tritt. Solche Wechselwirkungen lassen sich im Licht der Wechselwirkung, also jenem Teil des emittierten Lichtes, welches tatsächlich in Wechselwirkung getreten ist, als Änderung im Transmissions-, Reflexions- oder Absorptionsgrad bzw. als Fluoreszenzlicht in einem Detektor detektieren. Die Lichtquelle kann dabei etwa sichtbares Licht, UV-Licht oder IR-Licht emittieren.

Der Detektor kann beispielsweise als RGB-Kamera oder Spektrograph ausgeführt sein und über eine voreingestellte fixe Blendenöffnung verfügen.

Eine Auswerteeinheit vergleicht sodann die vom Detektor detektierten Werte mit jenen einer Datenbank, in der verschiedenen Klassen von Objekten verschiedene Wertebereiche, etwa Wellenlängenbereiche und/oder Intensitäten, zugeordnet sind, und ordnet so jedes Objekt einer Klasse zu. Abhängig von der detektierten Klasse wird in der Folge ein Erfassen des Objektes durch einen Aufnehmer oder ein Ablenken in vorbestimmte Container mittels Druckluft- oder Saugdüsen veranlasst.

Für die Lichtquellen werden häufig Leuchtstofflampen herangezogen, die UV-Licht oder sichtbares bzw. IR- Licht emittieren. Während der Lebensdauer einer solchen Lichtquelle nimmt ihre Strahlungsintensität ab, etwa durch Alterung oder durch Verschmutzung der Lichtquelle aufgrund der Beschaffenheit des Schüttgutes (Staub, feine Partikel, o.ä.). Jedoch ist für die Funktionalität des Detektors stets eine bestimmte Strahlungsleistung des detektierten Lichts notwendig, um die Objekte entsprechend detektieren zu können.

Ein Nachteil des Stands der Technik besteht darin, dass die Strahlungsintensität der Lichtquelle geregelt wird, also beispielsweise wird bei steigender Verschmutzung oder Alterung die abgesunkene Strahlungsintensität der Lichtquelle wieder nach oben geregelt, um die erforderliche Strahlungsleistung im Detektor zu erreichen. Dazu sind beispielsweise dimmbare Vorschaltgeräte für die Lichtquellen vorgesehen. Die Grenzen der Regelbarkeit sind jedoch eng und liegen etwa zwischen 50% und der maximalen Strahlungsintensität der Lichtquellen. Werden die Lichtquellen jedoch nahe der maximalen Strahlungsintensität betrieben, so wirkt sich dies negativ auf die Lebensdauer der Lichtquellen aus.

Sinkt die in den Detektor gelangende Strahlungsleistung unter die erforderliche Strahlungsleistung ab, ohne dass dies durch die Regelung der Strahlungsintensität der Lichtquelle kompensiert werden kann, so muss die Lichtquelle gereinigt oder gewechselt werden, was jedenfalls zu einem außerplanmäßigen Stillstand der Sortieranlage während des Betriebs führt. Als präventive Maßnahme ist nur das Vorsehen von vorgegebenen Reinigungszyklen bekannt, so dass regelmäßig geplante Stillstände der Sortieranlage in Kauf genommen werden müssen.

Zusätzlich dazu führt die ständige Änderung der Strahlungsintensität der Lichtquelle auch zu einer Änderung der Anregungsenergie, welche einem Grundsignal entspricht. Dies hat einerseits zur Folge, dass der Sortiervorgang nicht konstant mit der optimalen Anregungsenergie betrieben werden kann und dass die Auswerteeinheit jeweils auf die gerade aktuelle Anregungsenergie eingestellt werden muss. Sonst würde nämlich ein und dasselbe Objekt möglicher Weise verschiedenen Klassen zugeordnet werden, nur weil sich aufgrund der abgesunkenen Strahlungsintensität der Lichtquelle auch die Intensität des detektierten Lichts geändert hat.

### AUFGABE DER ERFINDUNG

Daher ist es eine Aufgabe der vorliegenden Erfindung, die Nachteile des Stands der Technik zu überwinden und ein Verfahren vorzuschlagen, bei dem die Lebensdauer der Lichtquellen signifikant erhöht werden kann. Des Weiteren soll sich die Erfindung durch eine kostengünstige Herstellung, eine einfache und robuste Konstruktion sowie eine erhöhte Ausfallsicherheit auszeichnen.

### DARSTELLUNG DER ERFINDUNG

Diese Aufgabe wird in einem erfindungsgemäßen Verfahren zur Einstellung der Strahlungsleistung des Lichts, das in einen optischen Detektor gelangt, durch welche Objekte in einem einschichtigen Materialstrom von Objekten identifiziert werden, wobei
- die Objekte mit zumindest einer Lichtquelle bestrahlt werden,
- zumindest ein Teil des emittierten Lichtes mit den Objekten in Wechselwirkung tritt,
- das Licht der Wechselwirkung von zumindest einem Detektor erfasst wird,
- aufgrund des Vergleiches des detektierten Lichts mit bekannten Daten betreffend den Zusammenhang zwischen unterschiedlichen Objekten und deren Licht der Wechselwirkung, verschiedene Objekte identifiziert werden,
dadurch gelöst, dass die in den zumindest einen Detektor eintretende Strahlungsleistung über eine verstellbare Blende in Abhängigkeit von der Strahlungsleistung des von der Lichtquelle emittierten Lichts eingestellt wird.

Durch die verstellbare Blende, welche in Richtung der Lichtstrahlen vor dem zumindest einen Detektor angeordnet ist, kann ein durchstrahlter Querschnitt des zumindest einen Detektors, also jene Fläche, durch die Licht in den Detektor eintritt, verändert werden, um die Strahlungsleistung des in den Detektor eintretenden Lichts, insbesondere jenes Teils der dem Licht der Wechselwirkung entspricht, zu verändern. So wird erreicht, dass eine zumindest erforderliche Strahlungsleistung im Detektor sichergestellt wird, indem der durchstrahlte Querschnitt an die vorherrschende Strahlungsleistung angepasst wird. Damit wird gewährleistet, dass die Strahlungsleistung des Lichts der Wechselwirkung, also des von der Wechselwirkung des emittierten Lichts mit den Objekten verursachten Lichts, ausreichend groß ist, damit dieses Licht detektiert werden kann und somit die Objekte entsprechend identifiziert werden können, um eine spätere Sortierung zu ermöglichen. Da das Licht der Wechselwirkung bzw. dessen Strahlungsleistung selbst eine Messgröße ist, die sowohl von Objekt zu Objekt als auch zeitlich gesehen variiert, ist die Strahlungsleistung des Lichts der Wechselwirkung selbst nicht geeignet, um die Blende einzustellen. Erst durch die Abhängigkeit der Einstellung der Blende von der Strahlungsleistung des emittierten Lichts ist es möglich das Licht der Wechselwirkung direkt zu beeinflussen und dabei auf eine alternative, von den Objekten unabhängige, Messgröße zur Bestimmung der Strahlungsleistung zurückzugreifen. Aufgrund des einfachen und direkten Zusammenhangs zwischen Strahlungsleistung des emittierten Lichts und Strahlungsleistung des Lichts der Wechselwirkung, ist diese Lösung besonders gut in der Praxis umsetzbar.

Da die Strahlungsintensität des in den Detektor eintretenden Lichts, insbesondere des Lichts der Wechselwirkung, abhängig von der Strahlungsintensität des von der Lichtquelle emittierten Lichts ist, kann durch das Vorsehen der verstellbaren Blende die Strahlungsleistung des in den Detektor eintretenden Lichts angepasst werden, ohne dabei die Strahlungsintensität der zumindest einen Lichtquelle regeln bzw. einstellen zu müssen. Demnach ist es nicht mehr notwendig die zumindest eine Lichtquelle zeitweise nahe ihrer maximalen Strahlungsintensität zu betreiben, was sich positiv auf die Lebensdauer der Lichtquelle auswirkt. Gleichzeitig kann auch das Risiko eines Ausfalls des Detektors aufgrund zu geringer Strahlungsleistung deutlich vermindert werden, bei gleichzeitiger Erhöhung der zeitlichen Abstände zwischen den Reinigungszyklen.

Unter dem von der Lichtquelle emittierten Licht ist dabei nicht nur jenes Licht zu verstehen, welches im unmittelbaren Nahbereich der Lichtquellen vorherrscht, sondern auch jener Teil des Lichtes, welcher entlang des Strahlenverlaufes von der Lichtquelle bis hin zum Detektor nicht mit den Objekten in Wechselwirkung tritt. Mit anderen Worten wird der Abfall der Strahlungsintensität bzw. der Strahlungsleistung aufgrund von Verschmutzungen der Lichtquelle oder der Lichtquelle nachgeschaltete Elemente, wie Filter, Quarzglasscheiben oder ähnliches, direkt dem von der Lichtquelle emittierten Licht zugerechnet. Um die Strahlungsintensität des von der Lichtquelle emittierten Lichts zu bestimmen, kann diese beispielsweise an einem beliebigen Punkt zwischen Lichtquelle und Detektor, vorzugsweise durch eine Messeinrichtung, gemessen werden, wobei die Messung kontinuierlich, in Intervallen oder in unregelmäßigen Abständen stattfinden kann. Besonders vorteilhaft ist die Messung der Strahlungsleistung in Richtung der Lichtstrahlen gesehen nach der Blende, da damit nicht nur eine Einstellung, sondern eine Regelung der Strahlungsleistung durch eine Regelgröße möglich ist.

Dabei ist der Bereich, in dem die Strahlungsleistung mittels der verstellbaren Blende eingestellt werden kann, wesentlich größer als dies im Stand der Technik der Fall ist. Experimente haben gezeigt, dass eine Regelung der verstellbaren Blende eine Verdoppelung der Grenzen der Regelbarkeit bezogen auf die im Stand der Technik beschriebene Regelung der Lichtquelle aufweist.

Wenn durch die Einstellung der Blende die Strahlungsleistung des Lichts, welches in den zumindest einen Detektor gelangt, über die Betriebsdauer, vorzugsweise Lebensdauer, der zumindest einen Lichtquelle bei Abwesenheit von Objekten konstant gehalten wird, so sind besonders hohe Scan- und Auflösungsraten im Detektor möglich, da Schwankungen nicht durch eine verarbeitende Software, etwa in einer Auswerteeinheit, ausgeglichen werden müssen. Die zeitliche Konstanz der Strahlungsleistung kann jedoch nur dann beobachtet werden, wenn sie durch keine Objekte beeinflusst wird, es also kein Licht der Wechselwirkung gibt, da, wie eingangs erwähnt, die Strahlungsintensität des Lichts der Wechselwirkung als Messgröße dient und auch von den Objekten abhängt. Die zeitliche Konstanz lässt sich jedoch beispielsweise auch an jenen Stellen einer Messstrecke beobachten, an denen sich aktuell keine Objekte befinden, und so keine Beeinflussung der Strahlungsleistung durch Objekte stattfindet.

Eine bevorzugte Möglichkeit eine Änderung der Strahlungsleistung des von der Lichtquelle emittierten Lichts und eine dadurch verursachte Änderung der Strahlungsleistung des in den Detektor eintretenden Lichts, insbesondere des Lichts der Wechselwirkung, zu kompensieren, besteht darin, dass die Blende derart eingestellt wird, dass bei einem Abfall der Strahlungsleistung des von der Lichtquelle emittierten Lichts durch Öffnen der Blende ein durchstrahlter Querschnitt des zumindest einen Detektors vergrößert wird und dass bei einer Zunahme der Strahlungsleistung des von der Lichtquelle emittierten Lichts durch Schließen der Blende der durchstrahlte Querschnitt des zumindest einen Detektors verkleinert wird. Da sich die Änderung der Strahlungsleistung als Abfall oder Zunahme der Strahlungsintensität äußert, kann, durch Öffnen oder Schließen der Blende bzw. durch Vergrößern oder Verkleinern des durchstrahlten Querschnittes, durch den Zusammenhang "Intensität mal Fläche gleich Leistung" die Strahlungsleistung des in den Detektor eintretenden Lichts, insbesondere des Lichts der Wechselwirkung, direkt beeinflusst werden und so der jeweiligen Strahlungsintensität der Lichtquelle angepasst werden. Damit wird sichergestellt, dass eine zumindest erforderliche Strahlungsleistung des Lichts der Wechselwirkung aufrechterhalten wird und so die Detektion der Objekte von der Änderung der Strahlungsintensität der Lichtquelle nicht beeinflusst wird.

Da die direkte Bestimmung der Strahlungsleistung des von der Lichtquelle emittierten Lichts an sich nur einfach möglich ist, wenn sich keine Objekte im Messbereich befinden, wäre zur direkten Bestimmung eine Unterbrechung des einschichtigen Materialstromes nötig, was zu einer verminderten Leistung des Gesamtsystems führt. Um diesen Nachteil zu überwinden, sieht eine Ausführungsvariante eines erfindungsgemäßen Verfahrens vor, dass zur Bestimmung der Strahlungsleistung des von der Lichtquelle emittierten Lichts die Strahlungsleistung eines Rohsignals gemessen wird, wobei das Rohsignal jenem Teil des emittierten Lichts entspricht, welcher nicht in Wechselwirkung mit den Objekten tritt. Da aufgrund der Beschaffenheit des einschichtigen Materialstromes zwischen Objekten immer Lücken auftreten, tritt immer nur ein Teil des von der Lichtquelle emittierten Lichts in Wechselwirkung mit den Objekten, während ein anderer Teil, im vorliegenden Fall das Rohsignal, nicht von den Objekten beeinflusst wird und somit die Strahlungsleistung des von der Lichtquelle emittierten Lichts repräsentiert. Somit kann durch die Messung der Strahlungsleistung des Rohsignales, welche durch entsprechende Messverfahren in der Auswerteeinheit in an sich bekannter Weise bestimmt wird, kontinuierlich eine Einstellung der Blende aufgrund von aktuellen Daten vorgenommen werden, ohne den Materialstrom unterbrechen zu müssen. In der Folge werden einige Anwendungsfälle und die dabei vorherrschenden Rohsignale näher erläutert:
Zur Erzeugung verschiedener Arten von Licht der Wechselwirkung ist die Verwendung unterschiedlicher Lichtquellen denkbar, so ist in weiteren Ausführungsvarianten vorgesehen, dass von zumindest einer der Lichtquellen im Wesentlichen UV-Licht emittiert wird und/oder von zumindest einer der Lichtquellen sichtbares oder IR-Licht emittiert wird.

UV-Licht, also ultraviolettes Licht, wird dabei in der Regel dazu verwendet, als Licht der Wechselwirkung die Änderung des Absorptions- oder Transmissionsgrades zu detektieren, also im Wesentlichen die Objekte zu durchstrahlen und durch das Licht der Wechselwirkung die Objekte zu identifizieren. Ein weiterer Einsatzbereich für UV-Licht ist die Anregung von Fluoreszenzlicht in den Objekten, welches Fluoreszenzlicht meist im blauen Bereich des sichtbaren Spektrums liegt, um durch die Fluoreszenz die Objekte zuordnen zu können. Beispielsweise eignet sich die Detektion von Fluoreszenzlicht bei der Identifikation von bleihaltigen Gläsern oder Sondergläsern.

Sichtbares Licht oder IR-Licht, also infrarotes Licht, kann ebenfalls für die Detektion von Änderungen des Absorptions- oder Transmissionsgrades des Lichts der Wechselwirkung herangezogen werden. Diese Lichtquellen eignen sich jedoch auch dafür, Reflexionseffekte hervorzurufen, welche eindeutig einer bestimmten Gruppe von Objekten zuordenbar ist. Beispielsweise lässt sich dadurch Buntglas von Weißglas unterscheiden.

Es versteht sich dabei von selbst, dass bei Vorhandensein mehrerer Lichtquellen und entsprechender Detektoren, auch mehrere Effekte des Lichts der Wechselwirkung parallel festgestellt werden können. So kann beispielsweise bei einer Bestrahlung mit UV-Licht aus einer Lichtquelle, welches UV-Licht Fluoreszenzlicht als entsprechendes Licht der Wechselwirkung hervorruft, und sichtbarem Licht aus einer anderen Lichtquelle, welches sichtbare Licht eine Änderung des Absorptionsgrades als Licht der Wechselwirkung hervorruft, sowohl bleihaltiges Glas als auch Buntglas detektiert werden oder es können Fremdkörper, welche das sichtbare Licht vollständig absorbieren und nicht fluoreszieren, identifiziert werden. Dabei ist eine Vielzahl an verschiedenen Kombinationen von Lichtquellen, Lichtarten und detektierten Effekten möglich. Der Zusammenhang zwischen dem emittierten Licht, den detektierten Effekten und der Art der Rohsignale stellt sich in bevorzugten Ausführungsvarianten wie folgt dar:
Handelt es sich bei dem Licht der Wechselwirkung des UV-Lichts mit den Objekten um Fluoreszenzlicht, so wird das Fluoreszenzlicht von zumindest einem der Detektoren detektiert und es handelt sich bei dem Rohsignal um von den Objekten unabhängiges Falschlicht der zumindest einen Lichtquelle. Da es sich bei dem Fluoreszenzlicht in der Regel um Licht im blauen Spektrum handelt, wird dieses Spektrum des Lichts weitestgehend aus dem von der Lichtquelle emittierten Licht herausgefiltert. Da eine vollständige Filterung technisch nicht möglich ist, verbleibt ein geringer Teil des von der UV-Lichtquelle emittierten Lichts im blauen Spektrum und wird als Falschlicht bezeichnet. Dieses, von den Fluoreszenzeffekten unabhängige, Falschlicht wird als Rohsignal zur Messung der Strahlungsleistung herangezogen.

Handelt es sich bei dem Licht der Wechselwirkung mit den Objekten um Reflexionslicht, welches von sichtbarem oder IR-Licht hervorgerufen wurde, so wird das Reflexionslicht von zumindest einem der Detektoren detektiert und es handelt sich bei dem Rohsignal um eine, von den Objekten unabhängige, Grundreflexion. Da zur Herstellung des einschichtigen Materialstromes oft eine entsprechende Einrichtung notwendig ist, beispielsweise eine Rutsche oder ein Förderband, kommt es durch das von der Lichtquelle emittierte Licht zu einer Wechselwirkung mit der Einrichtung, die als Grundreflexion bezeichnet wird. Diese Grundreflexion wird als Rohsignal zur Messung der Strahlungsleistung herangezogen, da diese von den Objekten unabhängig ist, und so kontinuierlich zur Messung der Strahlungsleistung verwendet werden kann.

Handelt es sich bei dem Licht der Wechselwirkung mit den Objekten um Transmissionslicht, so wird das Transmissionslicht von zumindest einem der Detektoren detektiert und es handelt sich bei dem Rohsignal um eine, von den Objekten unabhängige, Grundtransmission. Das Transmissionslicht der Objekte wird dabei von den Detektoren detektiert und kann anschließend in einer Auswerteeinheit beispielsweise in Absorptions-, Transmissions- und/oder Reflexionsgrade umgerechnet werden, über welche die Identifikation der Objekte erfolgt.

Das von der Lichtquelle emittierte Licht, das zwischen den Objekten durchtritt oder das bei Fehlen von Objekten in den Detektor eintritt, bildet die Grundtransmission. Diese Grundtransmission bzw. gleichermaßen Grundabsorption ist ebenfalls von der Einrichtung zur Herstellung des Materialstromes abhängig. Bei sogenannten Durchlichtsystemen, in denen Transmissions- bzw. Absorptionseffekte meistens ausgenützt werden, ist die Einrichtung aus lichtdurchlässigem Material, beispielsweise als Quarzglasscheibe oder Borofloat®-Glas, sodass der Teil des von der Lichtquelle emittierten Lichts, der nicht in Wechselwirkung mit den Objekten tritt, ausschließlich durch eine, meist sehr geringe Absorption der Einrichtung, beeinflusst wird und daher als Grundtransmission bezeichnet wird. Die Messung der Grundtransmission ist sowohl bei UV-Licht als auch bei sichtbarem bzw. IR-Licht möglich.

Um die verstellbare Blende ohne zusätzliche Messeinrichtungen zu regeln, wird in einer weiteren Ausführungsvariante eines erfindungsgemäßen Verfahrens die Strahlungsleistung des Rohsignals in dem zumindest einen, bereits vorhandenen, Detektor zur Erfassung des Lichts der Wechselwirkung gemessen. Da es sich bei dem Rohsignal um einen repräsentativen Wert für das von der Lichtquelle emittierte Licht handelt, wird also mit anderen Worten die Strahlungsleistung des von der Lichtquelle emittierten Lichts in zumindest einem Detektor bestimmt. Da es sich bei dem Detektor, wie eingangs erwähnt, um einen Spektrographen oder eine RGB-Kamera handelt, lässt sich über eine separate Auswerteeinrichtung oder eine im Detektor integrierte Auswerteeinheit, beispielsweise ein Mikroprozessor oder Mikrochip, neben der Detektion des Lichts der Wechselwirkung und der damit verbundenen Identifikation der Objekte auch die Strahlungsleistung des Rohsignals über entsprechende Algorithmen messen. Beispielsweise ist es denkbar, dass der Messbereich des Detektors in Zeilen unterteilt wird und jede Zeile einzeln ausgewertet wird. Liegt in einer Zeile eine gleichmäßige Strahlungsleistung vor, da keine beeinflussenden Objekte vorhanden sind, so kann die Strahlungsleistung dieser Zeile als Strahlungsleistung des Rohsignals interpretiert werden.

Ein weiterer Vorteil äußert sich dadurch, dass durch die Messung der Strahlungsleistung im Detektor, welcher jedenfalls in Richtung der Lichtstrahlen hinter der Blende angeordnet ist, eine Regelung der Strahlungsleistung möglich ist. Daher sieht eine weitere bevorzugte Ausführungsvariante der Erfindung vor, dass laufend eine Messung der Strahlungsleistung des Rohsignals stattfindet, wobei die Blende bei Unterschreitung eines unteren Schwellenwertes der Strahlungsleistung geöffnet wird und die Blende bei Überschreitung eines oberen Schwellenwertes der Strahlungsleistung geschlossen wird. Die Verstellung der Blende bringt die bereits zuvor erwähnten Effekte auf die daher nicht weiter eingegangen wird. Die Festlegung des oberen bzw. unteren Schwellenwertes ist dabei vom jeweiligen Detektor bzw. dem zu detektierenden Licht der Wechselwirkung abhängig und ist vom Fachmann entsprechend der jeweiligen Anwendung nach Erfahrungswerten bekannt.

Hat die Blende eine, beispielsweise durch die Baugröße des Detektors bestimmte, maximale Öffnung erreicht, so kann bei einem erneuten Abfall der Strahlungsleistung unter den unteren Schwellenwert, die erforderliche Strahlungsleistung nicht mehr erreicht werden. Dementsprechend ist in einer weiteren Ausführungsvariante der Erfindung vorgesehen, dass eine Fehlermeldung generiert wird, sobald der untere Schwellenwert unterschritten wird und die Blende nicht mehr weiter geöffnet werden kann. Durch die Fehlermeldung kann beispielsweise ein sofortigen Stillstand der Anlage und/oder eine Wartung der Anlage veranlasst werden.

Da in einem erfindungsgemäßen Verfahren die kontinuierliche Änderung der Strahlungsleistung durch die Einstellung der verstellbaren Blende übernommen wird, ist es nicht mehr notwendig, auch die Strahlungsintensität der zumindest einen Lichtquelle laufend zu regeln. So kann die Strahlungsintensität der zumindest einen Lichtquelle beispielsweise entweder für eine möglichst lange Lebensdauer der Lichtquelle oder für eine optimale Anregungsintensität oder für eine möglichst geringe Wärmeentwicklung eingestellt werden. In jedem Fall bleibt die Anregungsintensität annähernd konstant, sodass keine Abweichungen bei der Auswertung zu berücksichtigen sind, was ein optimiertes Signal- und Rauschverhalten nach sich zieht. Daher sieht eine weitere Ausführungsvariante vor, dass die Strahlungsintensität des von der zumindest einen Lichtquelle emittierten Lichts auf einen zeitlich konstanten Wert eingestellt wird.

Gemäß einer weiteren Ausführungsvariante der Erfindung wird die Strahlungsintensität des von der zumindest einen Lichtquelle emittierten Lichts über die Betriebsdauer, vorzugsweise die Lebensdauer, der Lichtquelle von einem Anfangswert auf einen Maximalwert erhöht. Durch diese Ausführungsvariante wird der bereits bekannte Effekt der Steuerung der Strahlungsintensität der Lichtquelle mit einer erfindungsmäßigen verstellbaren Blende verbunden. So kann die Lichtquelle, durch die Einstellung der Blende, über einen großen Zeitraum mit der optimalen Anregungsintensität betrieben werden insbesondere konstant gehalten werden. Erst wenn der Regelbereich der Blende erschöpft wird, was beispielsweise durch eine Fehlermeldung bekannt gegeben wird, wird die Strahlungsintensität der Lichtquelle erhöht, bis die maximale Strahlungsintensität erreicht ist, um den Wechselzyklus weiter zu verlängern.

Eine besonders bevorzugte Ausführungsvariante eines erfindungsgemäßen Verfahrens sieht vor, dass zumindest einer Lichtquelle mehrere Detektoren mit unterschiedlicher Detektionsempfindlichkeit zugeordnet sind und dass die entsprechenden Blenden der Detektionsvorrichtungen so eingestellt werden, dass die unterschiedlichen Detektionsempfindlichkeiten ausgeglichen werden. Da die üblichen Abmessungen einer Sortieranlage (normal zur Transportrichtung der Objekte) zwischen 500 mm und 1400 mm liegen, wobei auch andere Breiten denkbar sind, ist es notwendig, dass einer einzelnen Lichtquelle, beispielsweise einer Leuchtstoffröhre, mehrere Detektoren zugeordnet sind, um die volle Breite der Sortieranlage abzudecken. Nach dem Stand der Technik müssen nun die einzelnen Detektoren, welche aufgrund der Fertigungstoleranzen unterschiedliche Detektionsempfindlichkeiten aufweisen können, durch entsprechende softwareseitige Verstärkung der einzelnen Rohsignale, aufeinander abgestimmt werden. In Verbindung mit einem erfindungsgemäßen Verfahren ist es jedoch möglich, die Unterschiede durch die Einstellung der entsprechenden verstellbaren Blende optisch auszugleichen, wodurch Rauschen reduziert wird.

Die eingangs gestellte Aufgabe wird auch gelöst von einer Detektionsvorrichtung zur Durchführung eines erfindungsgemäßen Verfahrens, wobei diese zumindest umfasst:
- zumindest eine Lichtquelle, mit welcher ein einschichtiger Materialstrom, bestehend aus einer Vielzahl an Objekten, beleuchtet werden kann, wobei zumindest ein Teil des emittierten Lichts mit den Objekten in Wechselwirkung tritt,
- eine Einrichtung zum Herstellen eines einschichtigen Materialstroms, mit welcher der Materialstrom an der zumindest einen Lichtquelle vorbeigeführt werden kann,
- zumindest einen Detektor, welcher das Licht der Wechselwirkung detektieren kann,
wobei, in Richtung der Lichtstrahlen gesehen, vor dem zumindest einen Detektor eine verstellbare Blende zur Einstellung der in den Detektor eintretenden Strahlungsleistung angeordnet ist, über welche ein durchstrahlter Querschnitt der verstellbaren Blende in Abhängigkeit der Strahlungsleistung des von der zumindest einen Lichtquelle emittierten Lichts einstellbar ist.

Die verstellbaren Blende ist dabei in Richtung der Lichtstrahlen vor dem zumindest einen Detektor angeordnet, so dass die Lichtstrahlen zuerst die verstellbare Blende passieren müssen, bevor die eigentliche Detektion stattfinden kann.

Über die Veränderung des durchstrahlten Querschnitts der verstellbaren Blende kann die von Licht durchstrahlte Fläche, also jene Fläche über die Licht in den zumindest einen Detektor gelangt, vergrößert werden, so dass eine höhere Strahlungsleistung in dem zumindest einen Detektor vorherrscht. So kann beispielsweise eine verringerte Strahlungsintensität der Lichtquelle bzw. eine verringerte Strahlungsleistung des von der Lichtquelle emittierten Lichts durch das Öffnen der verstellbaren Blende und dem damit verbundenen größeren durchstrahlten Querschnitt kompensiert werden. So wird in einer erfindungsgemäßen Detektionsvorrichtung sichergestellt, dass die zumindest erforderliche Strahlungsleistung des Lichts der Wechselwirkung, welches für die Identifikation der Objekte notwendig ist, in einem großen Regelbereich erreicht wird.

Die Blende selbst kann dabei etwa iris-artig ausgebildet sein wobei der durchstrahlte Querschnitt vorzugsweise kreisrund, rechteckig oder quadratisch ist, um nur einige Möglichkeiten zu nennen.

Eine Ausführungsvariante einer erfindungsgemäßen Detektionsvorrichtung sieht vor, dass der zumindest eine Detektor mit einer Auswerteeinrichtung verbunden ist, durch welche die Strahlungsleistung des in den Detektor eintretenden Lichts bestimmbar ist. Die Auswerteeinrichtung kann dabei eine eigene Systemkomponente darstellen, welche unabhängig von den anderen Komponenten ausschließlich zur Bestimmung der Strahlungsleistung dient. Die Auswerteeinrichtung kann jedoch genauso als ein Teil der Auswerteeinheit, welche für die Identifikation der Objekte sorgt, oder als integraler Bestandteil des Detektors ausgebildet sein. Eine solche Auswerteeinrichtung könnte beispielsweise ein Mikrochip oder Mikroprozessor sein, wobei auch die Bestimmung über vorgegebene Algorithmen denkbar ist. Durch die Bestimmung der Strahlungsleistung des von der Lichtquelle emittierten Lichts können Rückschlüsse auf die aktuelle Strahlungsleistung des Lichts der Wechselwirkung in dem zumindest einen Detektor gezogen werden. Besonders vorteilhaft ist es, wenn die Blende aufgrund der von der Auswerteeinrichtung gemessenen Strahlungsintensität einstellbar ist und so der durchstrahlte Querschnitt der verstellbaren Blende in Abhängigkeit der Strahlungsintensität vergrößert oder verkleinert werden kann, um beispielsweise eine erforderliche Strahlungsleistung in dem zumindest einen Detektor sicherzustellen.

Gemäß einer weiteren Ausführungsvariante der Erfindung ist ein Teil des in den Detektor eintretenden Lichts ein, von der Strahlungsleistung des von der zumindest einen Lichtquelle emittierten Lichts abhängiges, messbares Rohsignal, welches Rohsignal jenem Teil des emittierten Lichts entspricht, welches nicht in Wechselwirkung mit den Objekten tritt. Das Rohsignal entspricht dabei gemäß den vorhergehenden Ausführungen entweder dem Falschlicht bei Fluoreszenzlicht, der Grundreflexion bei Reflexionslicht oder um eine Grundtransmission bei Transmissionslicht. Dieses Rohsignal ist neben dem, von den Objekten beeinflussten, Licht der Wechselwirkung, dessen Strahlungsleistung unter anderem von Objekt zu Objekt variiert, vorhanden und steht in direktem Zusammenhang mit dem von der Lichtquelle emittierten Licht. Durch die Messung der Strahlungsleistung des Rohsignals ist eine direkte Verbindung zur Strahlungsleistung des von der Lichtquelle emittierten Lichts herstellbar. Die Messung kann dabei beispielsweise in einer Messeinrichtung stattfinden, welche an jeder Stelle des Strahlenverlaufs anordenbar ist.

Es kann vorgesehen sein, dass die Strahlungsleistung des Rohsignals in der Auswerteeinrichtung messbar ist und dass die Auswerteeinrichtung Teil einer Auswerteeinheit ist, welche Auswerteeinheit das Licht der Wechselwirkung auswertet, um die Objekte zu identifizieren. Ist die Strahlungsleistung des Rohsignals in der Auswerteeinrichtung oder in der Auswerteeinheit, die beispielsweise als Teil des Detektors ausgebildet ist, messbar, so ist in einfacher Art und Weise die Blende in Abhängigkeit des von der Lichtquelle emittierten Lichts einstellbar. Da die Auswerteeinrichtung bzw. die Auswerteeinheit die Messdaten direkt aus dem Detektor bezieht, ist eine exakte Regelung der Strahlungsleistung des Lichts der Wechselwirkung in Abhängigkeit der Strahlungsleistung des von der Lichtquelle emittierten Lichts möglich. Das Rohsignal ist leicht bestimmbar, da im einschichtigen Materialstrom zwischen den Objekten Lücken vorhanden sind, in denen die Strahlungsleistung des Rohsignals unabhängig vom Licht der Wechselwirkung messbar ist, beispielsweise durch zeilenmäßige Abtastung des Messbereichs des Detektors und Detektion der "leeren" Zeilen, in denen kein Licht der Wechselwirkung vorherrscht.

Durch entsprechende Ausbildung der Auswerteeinrichtung bzw. Auswerteeinheit ist in weiteren bevorzugten Ausführungsvarianten der Erfindung vorgesehen, dass
- eine Stellinformation für eine Verstelleinrichtung generiert wird, welche, wenn die Strahlungsleistung des Rohsignals einen unteren Schwellenwert unterschreitet, eine Öffnung der Blende bewirkt und/oder
- eine weitere Stellinformation für eine Verstelleinrichtung generiert wird, welche, wenn die Strahlungsleistung des Rohsignals einen oberen Schwellenwert überschreitet, ein Schließen der Blende bewirkt und/oder
- dass eine Fehlermeldung generiert wird, wenn ein unterer Schwellenwert der Strahlungsleistung des Rohsignals unterschritten wird und die Blende einen maximalen Öffnungsgrad erreicht hat.

Durch eine derart ausgebildete Auswerteeinrichtung bzw. Auswerteeinheit ist eine erfindungsgemäße Regelung der Blende in Abhängigkeit von der Strahlungsleistung des von der Lichtquelle emittierten Lichts in der Detektionsvorrichtung durchführbar.

Um die Blende in einfacher Art und Weise verstellen zu können, ist in einer bevorzugten Ausführungsvariante einer erfindungsgemäßen Detektionsvorrichtung vorgesehen, dass der zumindest eine Detektor eine Verstelleinrichtung umfasst, über welche der durchstrahlte Querschnitt der verstellbaren Blende vergrößert bzw. verkleinert werden kann. Eine solche Verstelleinrichtung kann beispielsweise über einen mit der Auswerteeinrichtung verbundenen Antriebsmotor verfügen, durch welchen die Blende bewegt werden kann. Bevorzugt ist die Verstelleinrichtung über Stellinformationen einstellbar, welche von der Auswerteeinrichtung bzw. Auswerteeinheit aufgrund der Messdaten generierbar sind.

Wenn der zumindest eine Detektor in einem Detektorgehäuse mit einer Eintrittsöffnung für das Licht angeordnet ist, kann dies Eintrittsöffnung durch eine lichtdurchlässige Scheibe verschlossen sein, sodass der Detektor gegen äußere Einflüsse, insbesondere der Objekte des Materialstromes, wie beispielsweise Staubpartikel o.ä. geschützt ist. Dies erhöht die Genauigkeit des zumindest einen Detektors und senkt gleichzeitig die Ausfallswahrscheinlichkeit.

Eine weitere bevorzugte Ausführungsvariante einer erfindungsgemäßen Detektionsvorrichtung sieht vor, dass die zumindest eine Lichtquelle auf der dem Detektor zugewandten Seite der Einrichtung zum Herstellen des einschichtigen Materialstroms angeordnet ist. Bei einer solchen Anordnung handelt es sich um ein sogenanntes Auflichtsystem, bei dem das Licht der Wechselwirkung üblicherweise ein Reflexions- oder Absorptionslicht bzw. ein Fluoreszenzlicht ist. Aus dem jeweiligen Licht ist im Detektor ein entsprechender Absorptions-, Reflexions- oder Fluoreszenzgrad bestimmbar, über welchen die einzelnen Objekte entweder einzeln oder durch Kombination mehrerer Grade identifizierbar sind. Solche Systeme eignen sich insbesondere bei Objekten, welche nicht lichtdurchlässig sind, wie beispielsweise Mineralien oder Kunststoffe.

Handelt es sich bei den Objekten des Materialstromes jedoch um lichtdurchlässige Materialien, so ist in einer weiteren bevorzugten Ausführungsvariante einer erfindungsgemäßen Detektionsvorrichtung ein Durchlichtsystem vorgesehen, bei dem die zumindest eine Lichtquelle auf der dem Detektor gegenüberliegenden Seite der Einrichtung zum Herstellen des einschichtigen Materialstroms in einem Lichtquellengehäuse angeordnet ist. Bei solchen Systemen stellt das Licht der Wechselwirkung zumeist ein Transmissions-, Absorptions- oder Fluoreszenzlicht dar, über welches wie zuvor beschrieben die Objekte identifizierbar sind.

Wenn zumindest eine der Lichtquellen als eine UV-Lichtquelle, welche im Wesentlichen UV-Licht emittiert, ausgebildet ist, ist zumindest einer der Detektoren als Detektor zur Detektion von Fluoreszenzlicht oder der Änderung des Absorptions- oder Transmissionsgrades von UV-Licht ausgebildet. Dabei ist der Detektor geeignet, das von der UV-Lichtquelle hervorgerufene Licht der Wechselwirkung zu detektieren, wobei dieses Licht der Wechselwirkung selbst nicht zwangsweise im Bereich der Wellenlänge des UV-Lichts liegen muss. So liegt die Wellenlänge des Fluoreszenzlichts meist im Wellenlängenbereich des blauen Lichts.

Wenn zumindest eine der Lichtquellen als eine weitere Lichtquelle, welche sichtbares oder IR-Licht emittiert, ausgebildet ist, ist zumindest einer der Detektoren als weiterer Detektor zur Detektion von Transmissions- oder Reflexionslicht von sichtbarem oder IR-Licht ausgebildet. Der weitere Detektor kann jedoch ebenfalls so ausgebildet sein, dass auch jener Teil des Lichts, welcher nicht von den Objekten beeinflusst wird, detektiert werden kann.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Ausführungsvariante einer erfindungsgemäßen Detektionsvorrichtung bei einem Durchlichtsystem mit Spiegelfiltern für die UV-Lichtquelle
- Fig. 2: eine Detaildarstellung eines Detektors gemäß Detail A in den Figuren 1, 3, 4 und 5
- Fig. 3: eine weiter Ausführungsvariante einer erfindungsgemäßen Detektionsvorrichtung bei einem Auflichtsystem mit Spiegelfiltern für die UV-Lichtquelle
- Fig. 4: eine alternative Ausführungsvariante einer Detektionsvorrichtung bei einem Durchlichtsystem mit Reflektoren für die Lichtquellen
- Fig. 5: eine weitere alternative Ausführungsvariante einer erfindungsgemäßen Detektionsvorrichtung bei einem Auflichtsystem mit Reflektoren für die Lichtquellen

### WEGE ZUR AUSFÜHRUNG DER ERFINDUNG

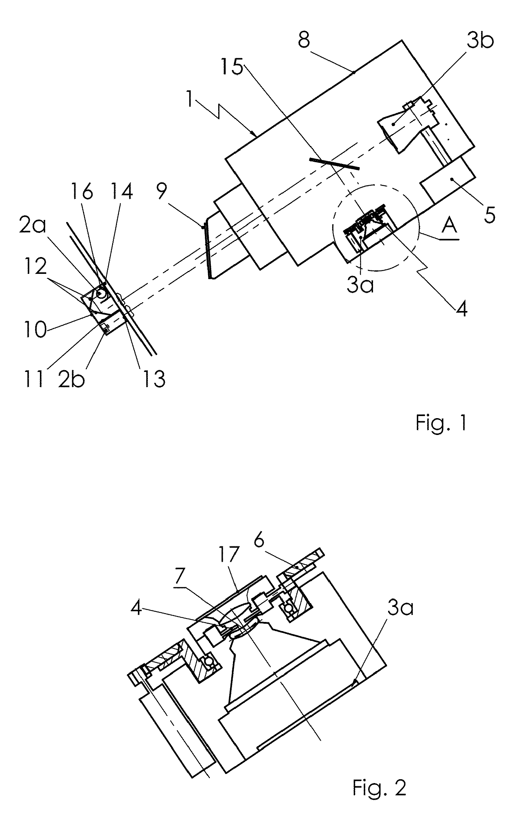

Fig. 1 zeigt eine Detektionsvorrichtung 1 durch welche Objekte in einem einschichtigen Materialstrom identifiziert werden können, bei der die Detektoren 3 als ein Detektor 3a und ein weiterer Detektor 3b ausgebildet sind. Des Weiteren sind die Lichtquellen 2 als eine UV-Lichtquelle 2a, vorzugsweise eine Leuchtstoffröhre, und eine weitere Lichtquelle 2b, in diesem Fall als LED-Leuchte (bzw. eine Reihe von LEDs), ausgebildet. Als Einrichtung zum Herstellen eines einschichtigen Materialstroms an Objekten dient eine als Quarzglasscheibe ausgebildete Rutsche 14, auf welcher die Objekte durch die Schwerkraft an der Detektionsvorrichtung 1 vorbei geführt werden.

Auf der einen Seite der Rutsche 14 ist ein Detektorgehäuse 8 zur Umhausung der Detektoren 3 mit einer Eintrittsöffnung 9 angeordnet, wobei auf der anderen Seite der Rutsche 14 ein Lichtquellengehäuse 10 zur Umhausung der Lichtquellen 2 angeordnet ist. Dadurch wird von den Lichtquellen 2 emittiertes Licht durch die Rutsche 14 bzw. durch die Quarzglasscheibe und gegebenenfalls durch die Objekte geleitet, um zu den Detektoren 3 zu gelangen. Es handelt sich bei dem hier angeführten Ausführungsbeispiel um ein sogenanntes Durchlichtsystem.

Im Lichtquellengehäuse 10 sind die UV-Lichtquelle 2a und die weitere Lichtquelle 2b durch eine lichtundurchlässige Trennwand 11 voneinander getrennt. Die UV-Lichtquelle 2a emittiert UV-A oder UV-C Strahlung, beispielsweise mit einer Wellenlänge von 254 nm, und ist so im Lichtquellengehäuse 10 eingebaut, dass das UV-Licht von den Detektoren 3 weg geleitet und durch zwei Spiegelfilter 12 um 180° umgelenkt und so zu den Detektoren 3 hin geleitet wird. Die Spiegelfilter 12 können dabei als Spiegel ausgebildet sein, welche mit einer Beschichtung versehen sind, die einen Großteil des von der UV-Lichtquelle 2a emittierten Lichtes im sichtbaren Bereich absorbiert. Dazu ist zwischen der UV-Lichtquelle 2a und dem den Detektoren 3 zugewandten Innenseite des Lichtquellengehäuses 10 ein Reflektor 16 vorgesehen, welcher die von der UV-Lichtquelle 2a emittierte Strahlung von den Detektoren 3 weg und in Richtung der Spiegelfilter 12 leitet.

Das Licht der als LEDs ausgebildeten weiteren Lichtquelle 2b wird durch eine Streuscheibe 13 geleitet, um das Licht der punktförmigen LEDs homogener zu machen und tritt parallel zum UV-Licht aus dem Lichtquellengehäuse 10 aus, wobei es vorteilhaft ist, wenn der Abstand zwischen Mittelachsen der austretenden Lichtstrahlen der beiden Lichtquellen 2 möglichst gering ist (im Idealfall deckungsgleich), um ein möglichst übereinstimmendes Bild der bewegten Objekte abbilden zu können.

Das von den Lichtquellen 2 emittierte Licht wird zu einem Teil durch die Objekte des Materialstroms nicht beeinflusst und bleibt als Rohsignal mess- bzw. detektierbar und tritt zum anderen Teil mit den Objekten in Wechselwirkung, wodurch ein Licht der Wechselwirkung entsteht. Dieses Licht der Wechselwirkung kann sich von dem ursprünglich emittierten Licht insbesondere im Absorptions- oder Transmissionsgrad unterscheiden. Im Zusammenhang mit dem UV-Licht kann das Licht der Wechselwirkung auch, wie insbesondere in diesem Beispiel, ein durch die UV-Strahlung hervorgerufenes Fluoreszenzlicht sein, wie dies beispielsweise bei der Detektion von bleihältigem Glas in Altglas-Sortieranlagen bekannt ist.

Das Licht der Wechselwirkung sowie der nicht beeinflusste Teil des emittierten Lichtes gelangen sodann, zumindest teilweise, durch die Eintrittsöffnung 9 in das Detektorgehäuse 8. Dabei ist es besonders vorteilhaft, wenn das Lichtquellengehäuse 10 bzw. die Lichtquellen 2 in Richtung der Lichtstrahlen in einer Linie mit der Eintrittsöffnung 9 ausgerichtet ist. Eine weitere vorteilhafte Variante sieht vor, dass die Eintrittsöffnung 9 durch ein Schutzglas verschlossen wird, das den Innenraum des Detektorgehäuses 8 vor Staub und vorzugsweise vor UV-C Strahlung schützt.

Das von der weiteren Lichtquelle 2b erzeugte Licht der Wechselwirkung wird im Detektorgehäuse 8 von dem weitern Detektor 3b, in der Regel eine Kamera, detektiert, wodurch etwa ein Bild des Objektes in Graustufen generiert wird, um Lage und Form des Objektes zu bestimmen und das Objekt gegebenenfalls mittels nachfolgender Austragseinrichtung aus dem Materialstrom zu entfernen. Der weitere Detektor 3b ist in der Regel in jenem Wellenlängenbereich empfindlich, in dem die weitere Lichtquelle 2b Licht aussendet. In diesem Beispiel handelt es sich bei dem weiteren Detektor 3b um eine RGB-Kamera, also einer Kamera, die die Farben Rot, Grün und Blau jeweils in einem Kanal überträgt bzw. speichert. Es versteht sich dabei von selbst, dass der weitere Detektor 3b zusätzlich zu dem Licht der Wechselwirkung auch jenen Teil des emittierten Lichts der weiteren Lichtquelle 2b als Information nützt, welcher nicht von den Objekten beeinflusst wird, also beispielsweise das Rohsignal, welches hier als Falschlicht des Fluoreszenzlichts und Grundtransmission des Transmissionslichts vorliegt.

Das Licht der Wechselwirkung, also sowohl das von der UV-Lichtquelle 2a hervorgerufene Fluoreszenzlicht als auch das von der weiteren Lichtquelle 2b hervorgerufene transmittierte Licht, trifft, in Richtung der Lichtstrahlen gesehen vor dem weiteren Detektor 3b, auf einen Strahlteiler 15, der blaues Licht, etwa im Wellenlängenbereich von 400 - 500 nm möglichst vollständig reflektiert sowie sichtbares Licht >500 nm (transmittiertes Licht) möglichst vollständig durchlässt.

Der reflektierte Lichtstrahl wird in den Detektor 3a geleitet, der beispielsweise einen CCD-Sensor (Charged-Coupled Device) und besonders empfindliche TDI-Elemente (Time Delay Integration) umfasst. Um jedoch zufriedenstellende Daten zu erhalten ist es notwendig, dass eine zumindest notwendige Strahlungsleistung des eintretenden Lichtes erreicht wird. Nach dem Stand der Technik ist vorgesehen, dass ein Objektiv des Detektors 3a eine fixe Blende aufweist, welche eine Fläche eines durchstrahlten Querschnitts 7, über die Licht in den Detektor 3a gelangt, definiert. Durch die Festlegung der Fläche ist eine Anpassung der Strahlungsleistung nur durch die Änderung der Strahlungsintensität möglich. Diese kann wiederum nur durch eine Anpassung der Strahlungsintensität der UV-Lichtquelle 2a erreicht werden, was zu den eingangs erwähnten Nachteilen führt.

Daher ist in der vorliegenden Erfindung vorgesehen, dass dem Detektor 3a eine verstellbare Blende 4 vorgeschaltet ist, über welche der durchstrahlte Querschnitt 7 angepasst werden kann. Dadurch kann in einfacher Art und Weise ein Abfall der Strahlungsintensität des Lichts der Wechselwirkung durch eine Vergrößerung der Fläche des durchstrahlten Querschnitts 7 ausgeglichen werden, ohne die Strahlungsintensität der UV-Lichtquelle 2a verändern zu müssen.

So ist es beispielsweise möglich, die Strahlungsintensität der UV-Lichtquelle 2a auf eine optimale Anregungsintensität, eine möglichst lange Lebensdauer der UV-Lichtquelle 2a oder eine minimale Wärmeentwicklung einzustellen und in diesem Betriebszustand konstant zu halten.

Um den durchstrahlten Querschnitt 7 anpassen zu können, kann beispielsweise der Detektor 3a so ausgebildet sein, dass dieser die Strahlungsleistung des in den Detektor 3a gelangenden Rohsignals messen kann. Andere Ausführungsvarianten können auch vorsehen, dass eine mit dem Detektor 3a verbundene Auswerteeinrichtung 5 aus von dem Detektor 3a generierten Daten die Strahlungsintensität messen kann. Es ist jedoch auch denkbar, dass der Abfall der Strahlungsleistung durch Algorithmen in der Auswerteeinrichtung 5 bzw. in dem Detektor 3a, beispielsweise in einem Mikroprozessor oder Mikrochip, selbst festgestellt wird.

Die verstellbare Blende 4 kann dabei etwa iris-förmig sein, wobei der durchstrahlte Querschnitt 7 vorzugsweise eine kreisrunde, rechteckige oder quadratische Form aufweist, jedoch sind auch andere geometrische Formen denkbar.

Wie in Fig. 2 abgebildet kann die Verstellbarkeit der Blende 4 durch eine Verstelleinrichtung 6 realisiert werden. Diese ist durch einen Motor angetrieben und kann beispielsweise als eine mit der Blende 4 verbundene Zahnscheibe ausgeführt sein, durch deren Rotation um eine Längsachse der Blende 4 der durchstrahlte Querschnitt 7 vergrößert oder verkleinert werden kann. Abhängig von der aktuell gemessenen Strahlungsleistung des Rohsignals wird eine Stellinformation für die Verstelleinrichtung 6 generiert, die entweder ein Öffnen der Blende 4 und damit eine Vergrößerung des durchstrahlten Querschnitts 7 bewirkt, sobald ein unterer Schwellenwert unterschritten wird oder ein Schließen der Blende 4 und damit eine Verkleinerung des durchstrahlten Querschnitts 7 bewirkt, sobald ein oberer Schwellenwert überschritten wird. So wird der durchstrahlte Querschnitt 7 entweder kontinuierlich oder schrittweise an die aktuelle Strahlungsleistung des von der Lichtquelle 2a emittierten Lichts angepasst, sodass eine zumindest erforderliche Strahlungsleistung des Lichts der Wechselwirkung in den Detektor 3a gelangt.

Sobald jedoch eine maximale Öffnung der Blende 4 erreicht ist und der untere Schwellenwert unterschritten wird, wird eine Fehlermeldung generiert, mit der beispielsweise eine Warnmeldung oder ein Notstop der Anlage eingeleitet wird. Es ist dabei jedoch auch denkbar, dass die Strahlungsintensität der Lichtquellen 2a,2b in diesem Fall erhöht werden, sodass diese zwar nicht mehr für die optimale Lebensdauer betrieben werden, jedoch noch die letzten Leistungsreserven des Systems ausgenützt werden können. Da diese Situation in der Regel erst spät im Lebenszyklus der Lichtquellen 2a,2b auftritt, ist die verringerte Lebensdauer vernachlässigbar.

Der Blende 4 ist ein Filter 17 vorgelagert, der in dieser Konstellation als Sperrfilter dient, um Streulicht im nicht erwünschten Wellenlängenbereich, also > 500 nm, zu reflektieren und am Eintritt in den Detektor zu hindern. Gleichzeitig soll jedoch das Fluoreszenzlicht, welches im Bereich des Blaulichts in einem Wellenlängenbereich zwischen 400 nm und 500 nm liegt, möglichst vollständig durchzulassen. Da der Detektor 3a über den gesamten Wellenlängenbereich empfindlich ist, wird so die Detektion von Fluoreszenzlicht sichergestellt.

Dadurch ist es beispielsweise möglich, den durchstrahlten Querschnitt 7 bei einem Abfall der Strahlungsleistung der Lichtquelle zu vergrößern und bei einem Anstieg der Strahlungsintensität zu verkleinern, um so die erforderliche Strahlungsleistung zu erreichen. Besonders vorteilhaft ist es, wenn die Blende 4 so geregelt wird, dass die Strahlungsleistung in dem Detektor 3a annähernd konstant gehalten wird.

Die detektierten Daten beider Detektoren 3a,3b werden sodann an eine nicht dargestellte Auswerteeinheit oder an die, in den anderen Figuren ersichtliche Auswerteeinrichtung 5 übermittelt, welche diese Daten mit einer Datenbank vergleicht, in welcher Daten über den Zusammenhang des detektierten Lichts der Wechselwirkungen und den entsprechenden Eigenschaften der Objekte gespeichert sind, um die Objekte eindeutig zu identifizieren und diese gegebenenfalls in der nachfolgender Austragseinrichtung aus dem Materialstrom zu entfernen oder in dafür vorgesehene Behälter zu sortieren.

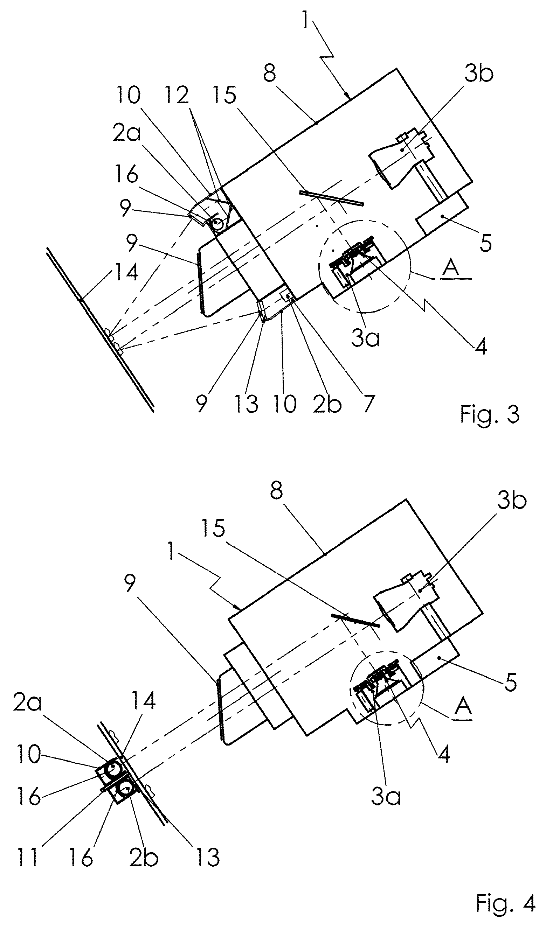

In Figur 3 ist eine weitere Ausführungsvariante einer erfindungsgemäßen Detektionsvorrichtung 1 abgebildet. Diese unterscheidet sich in wesentlichen Merkmalen von der zuvor beschriebenen Variante, jedoch bleibt die Funktionsweise der Blende 4 dieselbe.

Die Lichtquellen 2a,2b sind in dieser Variante auf der dem Detektorgehäuse 8 zugewandten Seite des Materialstromes angeordnet und befinden sich vorzugsweise in zwei gesonderten Lichtquellengehäusen 10, die beispielsweise an einer Außenseite des Detektorgehäuses 8 angebracht sind. Bei den Lichtquellen 2a,2b handelt es sich wiederum um eine als Leuchtstoffröhre ausgebildete UV-Lichtquelle 2a und eine als LED ausgebildete weitere Lichtquelle 2b.

Die UV-Lichtquelle 2a emittiert UV-A oder UV-C Strahlung, beispielsweise mit einer Wellenlänge von 254 nm, und ist so im Lichtquellengehäuse 10 eingebaut, dass das UV-Licht zu den Detektoren 3 geleitet, durch zwei Spiegelfilter 12 um 180° umgelenkt und so auf die Rutschfläche, auf der sich die zu sortierenden Objekte bewegen hin geleitet wird. Die Spiegelfilter 12 können dabei als Spiegel ausgebildet sein, welche mit einer Beschichtung versehen sind, die einen Großteil des von der UV-Lichtquelle 2a emittierten Lichtes im sichtbaren Bereich absorbiert.

Das Licht der als LEDs ausgebildeten weiteren Lichtquelle 2b wird durch eine Streuscheibe 13 geleitet, um das Licht der punktförmigen LEDs homogener zu machen und tritt aus dem Lichtquellengehäuse 10 so aus, dass es im selben Bereich des UV- Lichtstrahles auf die als Rutsche 14 ausgebildete Einrichtung zur Herstellung des einschichtigen Materialstroms auftrifft, wobei es vorteilhaft ist, wenn der Abstand zwischen Mittelachsen der austretenden Lichtstrahlen der beiden Lichtquellen 2a,2b möglichst gering ist (im Idealfall deckungsgleich), um ein möglichst übereinstimmendes Bild der bewegten Objekte abbilden zu können. Es handelt sich hier um ein Auflichtsystem, wobei die Rutsche 14 entweder als Quarzglasscheibe oder aber auch aus einem nicht transparentem Material, wie Kunststoff oder Metall, ausgebildet sein kann, solange die Grundreflexion des Auflichts gewährleistet ist.

Das von der weiteren Lichtquelle 2b emittierte sichtbare oder IR-Licht wird von den Objekten des Materialstromes teilweise absorbiert und reflektiert, so dass es sich bei dem entstehenden Licht der Wechselwirkung um ein Reflexionslicht handelt. Das von der UV-Lichtquelle 2a emittierte Licht kann entweder ebenfalls absorbiert und teilweise reflektiert werden oder aber, wie schon zuvor beschrieben, ein Fluoreszenzlicht hervorrufen, welches hier Licht der Wechselwirkung bildet.

Der weitere Aufbau der Detektionsvorrichtung 1, betreffend die Regelung der Blende 4 und die Anordnung der Detektoren 3, gleicht dem bereits zu den Figuren 1 und 2 geschilderten und wird daher nicht erneut ausgeführt.

In Figur 4 ist eine alternative Ausführungsvariante einer erfindungsgemäßen Detektionsvorrichtung 1 abgebildet. Diese ähnelt der in Figur 1 beschriebenen Variante, jedoch gibt es Unterschiede bei der Anordnung der Lichtquellen 2. Die Funktionsweise der Blende 4 bleibt jedoch wiederum dieselbe.

Auf der einen Seite der Rutsche 14welche in diesem Fall als Quarzglasscheibe oder Borofloat®-Glasscheibe ausgebildet ist, ist ein Detektorgehäuse 8 zur Umhausung der Detektoren 3 mit einer Eintrittsöffnung 9 angeordnet, wobei auf der anderen Seite der Rutsche 14 ein Lichtquellengehäuse 10 zur Umhausung der Lichtquellen 2 angeordnet ist. Dadurch wird von den Lichtquellen 2 emittiertes Licht durch die Rutsche 14 bzw. durch die Glasscheibe und gegebenenfalls durch die Objekte geleitet, um zu den Detektoren 3 zu gelangen. Es handelt sich bei dem hier angeführten Ausführungsbeispiel daher, wie bei der in Fig. 1 beschriebenen Variante, um ein Durchlichtsystem.

Bei den Lichtquellen 2 handelt es sich wiederum um eine UV-Lichtquelle 2a und eine weitere Lichtquelle 2b, welche jedoch beide als Leuchtstoffröhre ausgebildet sind. Im Lichtquellengehäuse 10 sind die UV-Lichtquelle 2a und die weitere Lichtquelle 2b durch eine lichtundurchlässige Trennwand 11 voneinander getrennt. Die UV-Lichtquelle 2a emittiert UV-A oder UV-C Strahlung, beispielsweise mit einer Wellenlänge von 370 nm, und ist so im Lichtquellengehäuse 10 eingebaut, dass das UV-Licht direkt zu den Detektoren 3 hin geleitet wird. Die Reflektoren 16, welche hinter den Lichtquellen 2a,2b angeordnet sind, reduzieren die Lichtverluste.

Sowohl das Licht der als Leuchtstoffröhre ausgebildeten weiteren Lichtquelle 2b als auch der UV-Lichtquelle 2a wird durch eine Streuscheibe 13 geleitet, um das Licht homogener zu machen und treten parallel aus dem Lichtquellengehäuse 10 aus, wobei es vorteilhaft ist, wenn der Abstand zwischen Mittelachsen der austretenden Lichtstrahlen der beiden Lichtquellen 2a,2b möglichst gering ist (im Idealfall deckungsgleich), um ein möglichst übereinstimmendes Bild der bewegten Objekte abbilden zu können.

Der Weg der Lichtstrahlen ist in weiterer Folge gleich dem in Figur 1 beschriebenen. Der Unterschied zwischen den beiden Systemen beruht auf den betrachteten Absorption- u. Transmissionswerten der Objekte. In diesem Fall wird die Transmission des UV - Lichtes durch die Objekte vom Detektor 3a gemessen.

Das Licht der Wechselwirkung, also sowohl das von der UV-Lichtquelle 2a als auch das von der weiteren Lichtquelle 2b hervorgerufene transmittierte Licht, trifft, in Richtung der Lichtstrahlen gesehen vor dem weiteren Detektor 3b, auf einen Strahlteiler 15, der in diesem Fall UV - Licht, etwa im Wellenlängenbereich von 320 - 380 nm möglichst vollständig reflektiert sowie sichtbares Licht >400 nm (transmittiertes Licht) möglichst vollständig durchlässt.

Die Detektion des Lichtes erfolgt analog der Beschreibung in Figur 2. Lediglich reflektiert der Filter 17 (=Sperrfilter) Streulicht im nicht erwünschten Wellenlängenbereich (sichtbares Licht >400 nm) und UV - Licht (im Wellenlängenbereich von 320 - 380 nm) wird möglichst vollständig durchlassen, da der Sensor 3a über den gesamten Wellenlängenbereich sensibel ist.

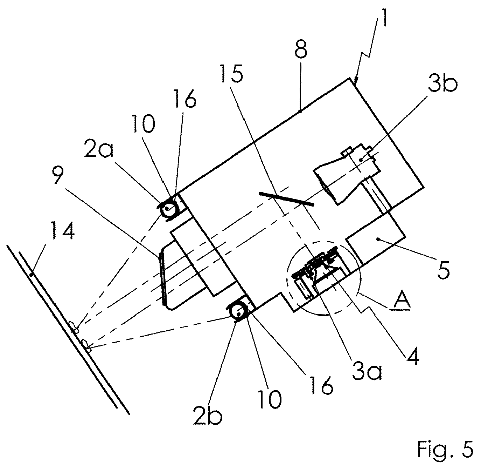

Die in Fig. 5 dargestellte weitere alternative Ausführungsvariante entspricht dabei einer Kombination der in den Figuren 3 und 4 beschriebenen Ausführungsvarianten:
Die Lichtquellen 2a,2b sind in dieser Variante auf der dem Detektorgehäuse 8 zugewandten Seite des Materialstromes bzw. der Rutsche 14 angeordnet und befinden sich vorzugsweise in zwei gesonderten Lichtquellengehäusen 10, die beispielsweise an einer Außenseite des Detektorgehäuses 8 angebracht sind. Bei den Lichtquellen 2 handelt es sich wiederum um eine UV-Lichtquelle 2a und eine weitere Lichtquelle 2b, welche beide als Leuchtstoffröhre ausgebildet sind. Das von den Lichtquellen 2 emittierte Licht wird durch Reflektoren 16, welche hinter den Lichtquellen 2a,2b angeordnet sind, in Richtung der Objekte hin geleitet. Es handelt sich um ein sogenanntes Auflichtsystem, wobei die Rutsche 14 entweder als Quarzglasscheibe oder aber auch aus einem nicht transparentem Material, wie Kunststoff oder Metall, ausgebildet sein kann, solange die Grundreflexion des Auflichts gewährleistet ist.

Das von der weiteren Lichtquelle 2b emittierte sichtbare oder IR-Licht wird von den Objekten des Materialstromes teilweise absorbiert und reflektiert, so dass es sich bei dem entstehenden Licht der Wechselwirkung um ein Reflexionslicht handelt. Das von der UV-Lichtquelle 2a emittierte Licht kann entweder ebenfalls absorbiert und teilweise reflektiert werden oder aber, wie schon zuvor beschrieben, ein Fluoreszenzlicht hervorrufen, welches als Licht der Wechselwirkung bezeichnet wird.

Der weitere Aufbau der Detektionsvorrichtung 1, betreffend die Regelung der Blende 4 und die Anordnung der Detektoren 3, gleicht dem bereits zur Fig. 2 und 3 geschilderten und wird daher nicht erneut ausgeführt.

Da es sich bei beiden gezeigten Beispielen nur um Ausführungsvarianten handelt, sei darauf hingewiesen, dass die einzelnen beschriebenen Elemente in beliebiger Kombination verwendet werden können, also beispielsweise ein Auflichtsystem mit Spiegelfiltern 12 oder ein Durchlichtsystem mit Reflektoren 16. Es versteht sich von selbst, dass eine verstellbare Blende 4 wie zuvor beschrieben auch in Systemen mit nur einem Detektor 3 und einer Lichtquelle 2 zum Einsatz kommen kann und sich deren Verwendung nicht auf den Detektor 3a beschränkt, sondern durchaus auch ein weiterer Detektor 3b mit einer verstellbaren Blende 4 versehen sein kann. Auch kann der Detektor 3a als ortsauflösendes Spektrometersystem zur direkten Detektion von UV-Strahlung, insbesondere Transmissionswerte, ausgebildet sein.

Ebenfalls können alle Lichtquellen sowohl in Form von Leuchtstofflampen als auch als LED - Leuchten (z.B. einer Reihe von LEDs) ausgeführt werden, sofern die Lampen und die LEDs dieselben optischen Eigenschaften (im Besonderen dasselbe emittierte Lichtspektrum) aufweisen.

Da eine Detektionsvorrichtung 1 auch eine Ausdehnung entlang einer auf die Bildebene normalen Richtung aufweist, üblich sind Breiten zwischen 500 und 1400 mm, ist es oft notwendig, dass einer Lichtquelle 2 mehrere Detektoren 3 zugeordnet sind. Die Verwendung einer verstellbaren Blende 4 ist in diesem Fall besonders vorteilhaft, da die einzelnen Detektoren, welche aufgrund der Fertigungstoleranzen unterschiedliche Detektionsempfindlichkeiten aufweisen können, nicht durch entsprechende softwareseitige Verstärkung der einzelnen Rohsignale, aufeinander abgestimmt werden, sondern die Unterschiede optisch ausgeglichen werden, wodurch Rauschen reduziert wird.

### BEZUGSZEICHENLISTE

- 1: optische Detektionsvorrichtung
- 2: Lichtquellen:
- 2a: UV-Lichtquelle
- 2b: weitere Lichtquelle
- 3: Detektoren:
- 3a: Detektor
- 3b: weiterer Detektor
- 4: verstellbare Blende
- 5: Auswerteeinrichtung
- 6: Verstelleinrichtung
- 7: durchstrahlter Querschnitt des Detektors 3
- 8: Detektorgehäuse
- 9: Eintrittsöffnung
- 10: Lichtquellengehäuse
- 11: Trennwand
- 12: Spiegelfilter
- 13: Streuscheibe
- 14: Rutsche
- 15: Strahlteiler
- 16: Reflektor
- 17: Filter

## Patentansprüche

1. Verfahren zur Einstellung der Strahlungsleistung des Lichts, das in einen optischen Detektor (3) gelangt, durch welche Objekte in einem einschichtigen Materialstrom von Objekten identifiziert werden, wobei
- die Objekte mit zumindest einer Lichtquelle (2) bestrahlt werden,
- zumindest ein Teil des emittierten Lichtes mit den Objekten in Wechselwirkung tritt,
- das Licht der Wechselwirkung von zumindest einem Detektor (3) erfasst wird,
- aufgrund des Vergleiches des detektierten Lichts mit bekannten Daten betreffend den Zusammenhang zwischen unterschiedlichen Objekten und deren Licht der Wechselwirkung, verschiedene Objekte identifiziert werden,
**dadurch gekennzeichnet, dass** die in den zumindest einen Detektor (3) eintretende Strahlungsleistung über eine verstellbare Blende (4) in Abhängigkeit von der Strahlungsleistung des von der Lichtquelle (2) emittierten Lichts eingestellt wird.

2. Verfahren nach Anspruch 1, **dadurch gekennzeichnet, dass** durch die Einstellung der Blende (4) die Strahlungsleistung des Lichts, welches in den zumindest einen Detektor (3) gelangt, über die Betriebsdauer, vorzugsweise Lebensdauer, der zumindest einen Lichtquelle (2) bei Abwesenheit von Objekten konstant gehalten wird.

3. Verfahren nach Anspruch 1 oder 2, **dadurch gekennzeichnet, dass** zur Bestimmung der Strahlungsleistung des von der Lichtquelle (2) emittierten Lichts die Strahlungsleistung eines Rohsignals gemessen wird, wobei das Rohsignal jenem Teil des emittierten Lichts entspricht, welcher nicht in Wechselwirkung mit den Objekten tritt.

4. Verfahren nach einem der Ansprüche 1 bis 3, **dadurch gekennzeichnet, dass** die Blende (4) derart eingestellt wird, dass bei einem Abfall der Strahlungsleistung des von der Lichtquelle (2) emittierten Lichts durch Öffnen der Blende (4) ein durchstrahlter Querschnitt (7) des zumindest einen Detektors (3) vergrößert wird und dass bei einer Zunahme der Strahlungsleistung des von der Lichtquelle (2) emittierten Lichts durch Schließen der Blende (4) der durchstrahlte Querschnitt (7) des zumindest einen Detektors (3) verkleinert wird.

5. Verfahren nach einem der Ansprüche 1 bis 4, **dadurch gekennzeichnet, dass** von zumindest einer der Lichtquellen (2) im Wesentlichen UV-Licht emittiert wird und/oder von zumindest einer der Lichtquellen (2) sichtbares oder IR-Licht emittiert wird.

6. Verfahren nach Anspruch 4 und 5, **dadurch gekennzeichnet, dass** es sich bei dem Licht der Wechselwirkung des UV-Lichts mit den Objekten um Fluoreszenzlicht handelt,
**dass** das Fluoreszenzlicht von zumindest einem der Detektoren (3) detektiert wird,
und **dass** es sich bei dem Rohsignal um von den Objekten unabhängiges Falschlicht der zumindest einen Lichtquelle (2) handelt.

7. Verfahren nach einem der vorhergehenden Ansprüche, **dadurch gekennzeichnet, dass** es sich bei dem Licht der Wechselwirkung mit den Objekten um Reflexionslicht handelt,
**dass** das Reflexionslicht von zumindest einem der Detektoren (3) detektiert wird,
und **dass** es sich bei dem Rohsignal um eine, von den Objekten unabhängige, Grundreflexion handelt.

8. Verfahren nach einem der vorhergehenden Ansprüche, **dadurch gekennzeichnet, dass** es sich bei dem Licht der Wechselwirkung mit den Objekten um Transmissionslicht handelt,
**dass** das Transmissionslicht von zumindest einem der Detektoren (3) detektiert wird,
und **dass** es sich bei dem Rohsignal um eine, von den Objekten unabhängige, Grundtransmission handelt.

9. Verfahren nach einem der Ansprüche 3 bis 8, **dadurch gekennzeichnet, dass** die Strahlungsleistung des Rohsignals in zumindest einem Detektor (3) zur Erfassung des Lichts der Wechselwirkung gemessen wird.

10. Verfahren nach Anspruch 9, **dadurch gekennzeichnet, dass** laufend eine Messung der Strahlungsleistung des Rohsignals stattfindet, wobei die Blende (4) bei Unterschreitung eines unteren Schwellenwertes der Strahlungsleistung geöffnet wird und die Blende (4) bei Überschreitung eines oberen Schwellenwertes der Strahlungsleistung geschlossen wird.

11. Verfahren nach Anspruch 10, **dadurch gekennzeichnet, dass** eine Fehlermeldung generiert wird, sobald der untere Schwellenwert unterschritten wird und die Blende (4) nicht mehr weiter geöffnet werden kann.

12. Verfahren nach einem der Ansprüche 1 bis 11, **dadurch gekennzeichnet, dass** die Strahlungsintensität des von der zumindest einen Lichtquelle (2) emittierten Lichts auf einen zeitlich konstanten Wert eingestellt wird.

13. Verfahren nach einem der Ansprüche 1 bis 12, **dadurch gekennzeichnet, dass** die Strahlungsintensität des von der zumindest einen Lichtquelle (2) emittierten Lichts über die Betriebsdauer, vorzugsweise die Lebensdauer, der Lichtquelle (2) von einem Anfangswert auf einen Maximalwert erhöht wird.

14. Verfahren nach einem der Ansprüche 1 bis 13, **dadurch gekennzeichnet, dass** zumindest einer Lichtquelle (2) mehrere Detektionsvorrichtungen (1) mit unterschiedlicher Detektionsempfindlichkeit zugeordnet sind und dass die entsprechenden Blenden (4) der Detektionsvorrichtungen (1) so eingestellt werden, dass die unterschiedlichen Detektionsempfindlichkeiten ausgeglichen werden.

15. Detektionsvorrichtung (1) zur Durchführung eines Verfahrens nach einem der Ansprüche 1 bis 14, **dadurch gekennzeichnet, dass** diese zumindest umfasst:
- zumindest eine Lichtquelle (2), mit welcher ein einschichtiger Materialstrom, bestehend aus einer Vielzahl an Objekten, beleuchtet werden kann, wobei zumindest ein Teil des emittierten Lichts mit den Objekten in Wechselwirkung tritt,
- eine Einrichtung zum Herstellen eines einschichtigen Materialstroms, mit welcher der Materialstrom an der zumindest einen Lichtquelle (2) vorbeigeführt werden kann,
- zumindest einen Detektor (3), welcher das Licht der Wechselwirkung detektieren kann,
wobei, in Richtung der Lichtstrahlen gesehen, vor dem zumindest einen Detektor (3) eine verstellbare Blende (4) zur Einstellung der in den Detektor (3) eintretenden Strahlungsleistung angeordnet ist, über welche ein durchstrahlter Querschnitt (7) der verstellbaren Blende (4) in Abhängigkeit der Strahlungsleistung des von der zumindest einen Lichtquelle (2) emittierten Lichts einstellbar ist.
